# EUROPEAN PATENT SPECIFICATION

(11) **EP 2 256 034 B1**
(45) Date of publication and mention of the grant of the patent: **14.12.2011**
(21) Application number: 09400024.7
(22) Date of filing: 27.05.2009
(51) Int. Cl.: B64C 27/473

(54) **Rotor blade as fibre composite profile body and method of manufacture therefor in resin injection technology**
Rotorblatt als Faserverbundprofilkörper und Verfahren zu seiner Herstellung mittels Harzinjektionstechnik
Pale de rotor en tant que corps de profilé composite de fibres et son procédé de fabrication dans la technologie d'injection de résines

(43) Date of publication of application: 01.12.2010
(73) Proprietor: Eurocopter Deutschland GmbH, 86609 Donauwörth (DE)
(72) Inventor: Kuntze-Fechner, Gerald, 83666 Waakirchen (DE); Wagner, Alois, 83623 Dietramszell (DE); Müller, Christine, 81547 München (DE)
(74) Representative: GPI & Associés

(56) References cited:
- DE-A1-102004 060 687
- US-A- 3 552 881
- US-A1- 2002 164 251

## Description

The invention relates to a profile body in fibre composite design, in particular a rotor blade of a rotary-wing aircraft or helicopter, comprising a filling core, comprising a blade skin enveloping the filling core, comprising a nose shell as erosion protection at a leading edge of the rotor blade, comprising a nose weight at the leading edge of the rotor blade and comprising spars running in the longitudinal direction of the blade. The invention also relates to a method for manufacturing such a profile body in resin injection technology.

Nowadays, rotor blades in fibre composite design are usually manufactured by the wet or prepreg construction method. This is associated with a large amount of manual work and is as a result very cost-intensive and liable to error. Even small modifications to simplify the method or to eliminate sources of error therefore have a cost-reducing or quality-enhancing effect.

US 2002/0164251 A1, which shows all the features of the preambles of claims 1 and 8, discloses a rotor blade with a strip with unidirectional fibres near the beamwise neutral axis minimizing the impact of these fibres on beam stiffness.

US-A 3,552,881 discloses a rotor blade with a spar formed from a hollow box structure comprising two opposed U-shaped members. A nose weight is applied to the rotor blade.

It is therefore the object of the invention to improve the manufacture of known profile bodies of rotor blades in fibre composite design.

This object is achieved in an initially specified profile body by constructing the spars running in the longitudinal direction of the blade from unidirectional flat fibre strips, as specified by the features of claim 1. The spars serve not only to reinforce the aerodynamically highly loaded leading edge of the rotor blade which supports them as it were. But they also absorb the bending and centrifugal forces acting on the rotor blade during operation. The spars therefore concomitantly form parts of the shell and a framework of the rotor blade. They run precisely like the centrifugal forces in the longitudinal direction of the rotor blade. In addition, the flat fibre strips in the profile thickness direction are located in a concentrated manner on the profile outer side with the result that bending forces from the vertical impact motion can be optimally absorbed. Due to the corresponding profile according to the invention of the fibres of the unidirectional flat fibre strips forming the spars, the individual fibres can optimally relay the ensuing bending and centrifugal forces to a connecting section of the rotor blade at a drive device. Since the fibres run in accordance with the force flow, they are optimally loaded, the material is therefore optimally utilised. The formation of the spars from unidirectional flat fibre strips therefore offers a minimal usage of material with maximum strength, constituting an optimisation of material. Due to the sparing and effective use of material as well as the manufacture by simple handling of flat fibre strips, the manufacture of the profile body can be configured more cost-effectively. Instead of many individual small-cross-section fibre strands, only a few large-cross-section fibre strips need to be positioned during the laying process of the spar. The individual fibres of the unidirectional flat fibre strips can be held together mechanically or chemically in their transverse direction. Mechanical cohesion can be achieved by seams or cross-woven fibres, chemical cohesion can be achieved by "adhesive" binder materials.

The spars running in the longitudinal direction of the blade are formed from a plurality of fibre layers from the unidirectional fibre material, coated one above the other. By using fibre layers of the same width, spars having a rectangular cross-section of almost arbitrary dimensions can thus be produced. According to an advantageous embodiment of the invention, the spars comprise flat fibre strips of different width. By this means, optionally multiply stepped spars can be formed, which can have an increasing thickness in the direction of the front edge of the rotor blade. This is because, on account of its aerodynamic profile, rectangular spars cannot easily be integrated in the profile body of a rotor blade. By using flat fibre strips, however, which are staggered in their width, the spars running in the longitudinal direction of the blade can advantageously be adapted to the cross-sectional shape of the rotor blade.

In order to limit the production costs of the spars despite an irregular cross-section, the spars can be configured to be stepped. The fibre layers of one step of the spar can then have substantially the same width, with the result the laying of the individual fibre layers is not unnecessarily complicated. The spars increase in their thickness in the direction of the leading edge of the rotor blade in order, on the one hand, to shift the centre of gravity of the profile of the rotor blade as far as possible in the area of the point of application of the aerodynamic force on the profile (approximately 25% of the profile depth). On the other hand, the spars form a reinforcement of the leading edge and a stable underlayer of the leading edge protection for absorption of the impact energy of small parts possibly impacting on the leading edge or in the event of contact with foreign bodies.

Rotor blades as a light-weight component of an aircraft should naturally have the smallest possible weight. Rotor blades in fibre composite design are therefore fitted with a foam core or similar light filling materials (e.g. honeycomb structures) as filling core which fills a large part of the cross-section of the profile body. In its posterior half, in the finished state of the rotor blade the filling core is merely covered with a blade skin. Since rotor blades are usually produced by means of a pressing method using a two-part mould and the blade skin is thus not closed, the lower skin must be connected to the upper skin in a suitable manner in order to be able to absorb the forces resulting from the structure. According to an advantageous embodiment of the invention, the filling core therefore has a fibre cap which stabilises the profile body on the anterior side and/or a trailing edge reinforcement on the rear side for the transmission of forces. At the same time, the anterior fibre or nose cap provides a stable underlayer for the spars applied thereon and the nose shell as an erosion protection shell of the rotor blade. Finally, said cap constitutes the last load-distributing layer which distributes the loads acting on the leading edge of the rotor blade as uniformly as possible to the relatively soft and less loadable filling core.

According to a further advantageous embodiment of the invention, the foam cap and/or the trailing edge reinforcement is formed from a plurality of layers or a fibre fabric or fibre scrim. They are therefore also manufactured in fibre composite design.

According to a further advantageous embodiment of the invention, the blade skin of the rotor blade consists of fibre fabrics or fibre scrims. This can therefore also be formed in the production technology of the rest of the rotor blade so that its assembly does not mean any additional expenditure due to a change of production technology.

In order to bring the centre of gravity of the rotor blade as close as possible into the region of the 25% axis, a nose weight or a nose lead is usually integrated in the profile nose in the profile of the rotor blade. According to a further advantageous embodiment of the invention, an injection or vacuum channel is integrated in the nose weight for the resin infusion or injection method. Thus, the nose weight acquires a double task, i.e. on the one hand the adjustment of the centre of gravity of the rotor blade and on the other hand, the formation of a resin channel for the manufacture of the rotor blade. Since the profile region of the rotor blade to be injected mainly extends on its rear side of the nose weight facing away from the leading edge, the resin channel is more favourably place there. It runs over the entire length of the nose weight in the longitudinal direction of the blade so that the blade profile is reliably impregnated with resin over its entire length. A uniform impregnation with resin can thus be achieved.

Alternatively or additionally to this, according to a further advantageous embodiment of the invention, resin channels can be integrated in the filling core on its surface. They can run, for example, as U-shaped slits in the filling core so that the opening side of the U-cross-section is covered by fibre layers. Injection resin can penetrate as uniformly as possible into the fibre layers and impregnate these through the opening of the resin channels running linearly in the longitudinal direction of the rotor blade during its manufacture.

The nose cap is a weight-optimal solution in order to, on the one hand, transmit forces in the longitudinal direction of the blade and on the other hand, in order to sufficiently stiffen the leading edge of the rotor blade from acting loads ("impact") and thus make it less vulnerable. These functions can also be achieved through a different method of construction. According to a further advantageous embodiment of the invention, a spar section therefore runs between the nose weight and the filling core, separating the nose weight from the filling core. Directly behind the nose weight, there is formed for this purpose a solid spar-shaped structure of unidirectional narrow fibre strips which completely "partitions off" the nose weight towards the foam core. The unidirectional fibre layers of the blade or spar upper side are directly connected to the unidirectional fibre layers of the blade or spar underside in this region. The connecting surface should be about 10-25 mm wide in the blade cross-section. The unidirectional flat strips can be stepped to produce a gentle transition between spar and foam core. This configuration in the profile nose area is certainly somewhat more difficult to construct, but overall results in lower production costs because of the easier laying with unidirectional flat fibre strips. In addition, it should accommodate mechanical production.

According to a further advantageous embodiment of the invention, the profile body comprises webs for connecting its blade upper side to its blade lower side. These extend substantially vertically through the plane of extension of the filling core and impart additional stability to the profile body. For this, they more favourably adjoin the spar strips.

The object specified initially is additionally achieved by a method for manufacturing a profile body, in particular a rotor blade of a rotary-wing aircraft, in fibre composite design, as defined by the features of claim 8.

The manufacture of the filling core of the rotor blade is known from the prior art. The foam cap and/or the trailing edge reinforcement of the rotor blade are formed by covering the filling core with fibre material in sections, and these cover the leading edge and optionally the trailing edge of the rotor blade during the subsequent manufacturing process. The blade skins are then manufactured with a textile fabric and laid separately. Fibre layers of unidirectional, diagonal or triaxial woven or knitted fabric serve as fabric. Spar structures or spars are formed on the blade skins by subsequent coating of flat fibre strips of unidirectional fibres. These are adapted to the blade profile since they can be varied in width and arranged offset with respect to one another. As a result, the rotor blade substantially acquires its final form. In this processing step, a nose weight can optionally be attached to the leading edge of the rotor blade. Then the lower blade skin with spar, the filling core with fibre caps placed thereon and the upper blade skin with spar are inserted in the injection mould before, after closing the mould, curable resin is then injected into the fibre layers. After curing the profile body under pressure and temperature, it is removed for further processing. This possibly includes placing a nose shell on the leading edge of the profile body, forming protection from erosion.

According to an advantageous embodiment of this manufacturing method, the injection resin is injected linearly from a leading side of the profile body. This is where the fibre layers having the greatest thickness are found. Only when these are fully injected, does the resin flow through the less thick fibre layers of the spar strips decreasing towards the trailing edge and then through the blade skin of the trailing edge of the profile body. The passage cross-section of the resin through the fibre layers therefore decreases consistently in the direction of flow. When the resin emerges in a vacuum channel at the trailing edge of the blade, optionally in the injection mould, the resin has completely impregnated the fibre layers of the profile body.

According to a further advantageous embodiment of the manufacturing method, unidirectional flat fibre strips are pre-assembled and joined together, possibly sewn, to form spars. They can be laid with a likewise pre-assembled blade skin of the future rotor blade and tacked or fastened thereon. The pre-assembled blade skin surrounding the filling core and the spars running in the blade in its longitudinal direction and forming reinforcing sections are connected to one another before being applied jointly to the prepared filling core in a simpler assembly step. Since both the blade skin and also the spars consist of flat textile fabrics, they can be pre-assembled more easily on a flat working surface than on the curved and optionally slightly stepped shape of the filling core, which is adapted to the aerodynamic profile of the future rotor blade. This facilitates manufacture and reduces the liability of the manufacturing method to error.

According to a further advantageous embodiment of the method according to the invention, after de-moulding the profile body in step g), a nose shell with protection from erosion is fastened to its leading edge. A nose weight or a nose lead can be integrated in the nose shell if this has not already been fastened to the leading edge during manufacture of the foam cap.

The principle of the invention will be described in further detail hereinafter with reference to a drawing as an example. In the drawings:
**Fig. 1**: shows a sectional view through the profile body of a rotor blade,
**Fig. 2****:** shows a sectional view through a second embodiment of a profile body,
**Fig. 3**: shows a blade skin with stepped spar,
**Fig. 4**: shows a profile body according to Fig. 1 in exploded view,
**Fig**. **5**: shows a raw state of the profile body without nose shell,
**Fig. 6****:** shows the front area of the profile body with nose shell not yet placed thereon,
**Fig. 7**: shows an alternative embodiment of a profile body,
**Fig. 8**: shows an exploded view of the profile body according to Figure 7,
**Fig. 9**: shows a schematic diagram of an injection mould together with profile body in exploded view,
**Fig. 10**: shows a schematic diagram of an injection mould with inserted profile body,
**Fig. 11****:** shows a further alternative embodiment of a profile body and
**Fig**. **12**: shows an alternative embodiment of the profile body according to Fig. 11.

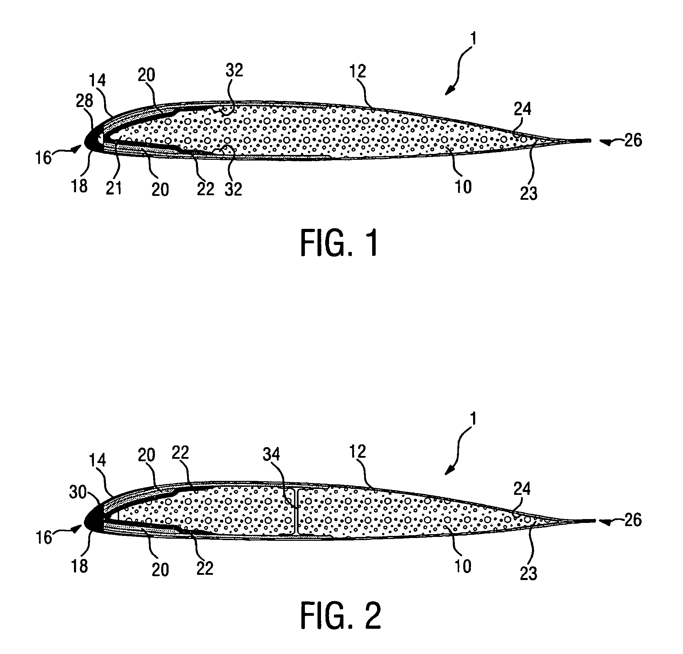

Figure 1 shows a first embodiment for a ready-assembled profile body 1 of a rotor blade in cross-section. The cross-section extends over almost the entire blade section of the rotor. It is only modified in the area of a connecting section of the rotor blade at a drive device, not shown, on the one hand and in the area of a blade tip, likewise not shown, on the other hand. The profile body 1 has a leading edge 16 facing the direction of flow when in operation and a rear side 26. The cross-section of the profile region 1 is substantially filled by a foam core 10 as filling core, which is surrounded by a blade skin 12.

Additionally provided at the leading edge 16 is a nose shell 14 whose tip is filled with a nose weight 18. This contains an injection channel 28 facing away from the leading edge 16, facing the tip 21 of the foam core 10 and having a semicircular cross-section, which runs in the longitudinal direction of the blade and therefore in the viewing direction. Flat and stepped spars 20 begin behind the nose weight 18 and under blade skin 12, still in the area of the nose shell 14, running in the longitudinal direction of the blade almost unchanged in their dimensions between connecting section and blade tip and having a cross-section which tapers in the direction of the rear side 26.

A foam cap 22 is located in the area of the leading edge 16 and between the two spars 20 and the foam core 22. This runs from the tip of the foam core 10 in the area of the leading edge as far as injection channels 32 having a semicircular cross-section, which run in the longitudinal direction of the blade. At its rear side 26 the profile body 1 runs out in a flat end 23 which bears a trailing edge reinforcement 24 under the blade skin 12.

The further example shown in Figure 2 differs from the profile body 1 shown in Figure 1 on the one hand by a web 34 which passes vertically through the foam core 10 and adjoins the spars 20 in their tapered rear area. In addition, the foam core 10 there lacks the tip 21 so that an injection channel 30 running in the longitudinal direction of the blade is formed there instead of in the nose weight 18. Otherwise, however, the two exemplary embodiments correspond to one another.

The blade skin 12, the nose shell 14, the spars 20, the foam cap 22 and the trailing edge reinforcement 24 consist of fibre material in the form of textile fabric. The spars 20 consist of a unidirectional fibre material whose fibre longitudinal direction extends in the longitudinal direction of the blade and therefore perpendicular to the plane of the drawing. Each layer has a thickness of 0.3 mm and consists of a material having a weight per unit area of 400 g/m². The individual fibres are cross-woven with a small fibre fraction for their cohesion in the transverse direction.

The blade skin 12 on the other hand consists of a multi-axial fabric. This can be, for example, a bidiagonal glass scrim having a fibre direction of +/-45° or a triaxial scrim having an additional small fraction of, for example, 20% with a fibre direction of 0°. Its weight per unit area, in a range between 270 and 300 g/m², is less than the weight per unit weight of the fibre material of the spars 20. The thickness of the fibre material lies between 0.25 mm and 0.3 mm.

The same material is used for the foam cap 22 as for the blade skin 12. Since its thickness at its trailing-edge end decreases towards the injection channels 32, it is formed from individual layers of different width. In order to ensure sufficient protection of the foam core during its production and a corresponding load-bearing capacity of the foam cap 22, this consists of about ten individual fibre material layers. It thus attains a thickness of 2.5 mm.

The trailing-edge reinforcement 24 is formed from likewise the same material as the blade skin 12 and the foam cap 22. Since overall it is not subjected to such high loads as the foam cap 22, it is only 0.5 mm thick and therefore formed from two layers of fibre material. The foam cap 22 and the trailing edge reinforcement 24 are adhesively bonded to the foam core 10.

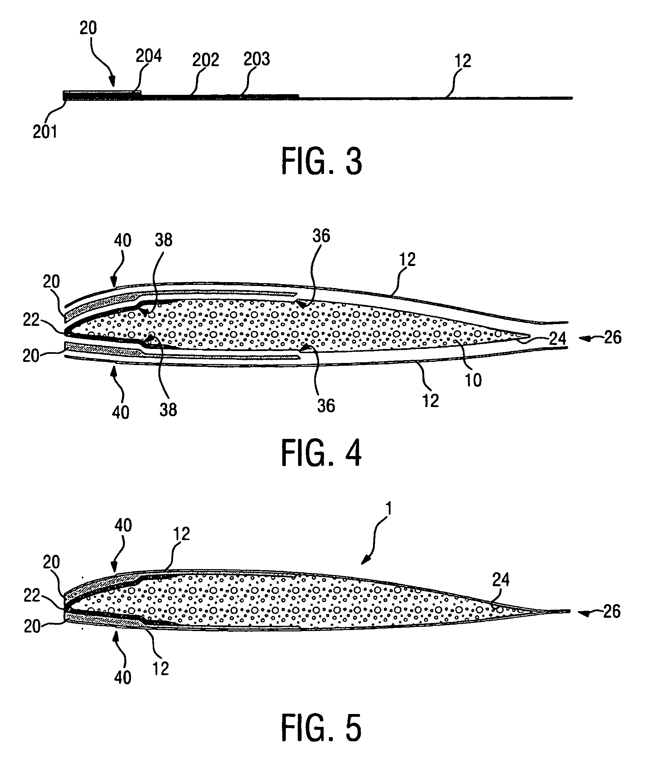

The blade skin 12 and the spars 20 are initially pre-assembled before they are applied to the foam core 10. This is shown in a sectional view in Figure 3. Accordingly, the spar 20 is configured as simply stepped and is composed of the layer packages 201, 202, 203 and 204. These are about 50 mm wide and 2 mm or 3 mm thick. Each layer package 201 to 203 comprises six layers of fibre material, the layer package 204 about ten layers. The blade skin is laid flat as shown in Figure 3 and the spar 20 fastened thereon by sewing the layer packages 201 to 204 to the blade skin 12. This merely comprises an assembly fastening so that during the subsequent mounting on the foam core 10 the relative positions of the blade skin 12 and the spar 20 can no longer be displaced with respect to one another. An alternative mounting fastening can be produced in a thermoplastic connection of the layer packages 201 to 204 and the blade skin 12 by an interposed binder nonwoven. The stepped spar 20 is formed by this being thickened in the area of the future leading edge 16 by the doubled layer package 204 which is applied to the layer package 201.

After this pre-assembly step in which the blade skin 12 and the spar 20 are joined together, these are jointly fastened to the foam core 10 which is already equipped with a foam cap 22 and trailing edge reinforcement 24. Figure 4 shows this schematically for the profile body 1 according to Figure 1. To illustrate the individual layers, however, the blade skin 12 and the spar 20 are still shown as separate from one another. The foam core 10 is already adhesively bonded to the foam cap 22 and the trailing edge reinforcement 24. This has approximately at its centre respectively two steps 36 in which the narrower section of the spar 20 formed by the layer packages 202 and 203 can be inserted flush. For the same reason, the foam core 10 and the foam cap 22 have a step 38 in which the region of the spar 20 reinforced by the layer package 204 can be inserted. Thus, the blade skin 12 runs completely continuously over the spar 20 and the foam core 10 from the leading edge 16 as far as the rear side 26 of the profile body. The blade skin 40 forms a step 40 in the area of the leading edge 16. This makes it possible to place the nose shell 14 flush (cf. Figs. 1 and 2).

The blade skin 12 and the spar 20 are fixed on the foam core 10 in such a manner as to avoid any displacement during placement of the nose shell 14, during closure of the injection mould and during the resin injection. The fixing can consist of a thermoplastic binder nonwoven, a film adhesive or in tacking.

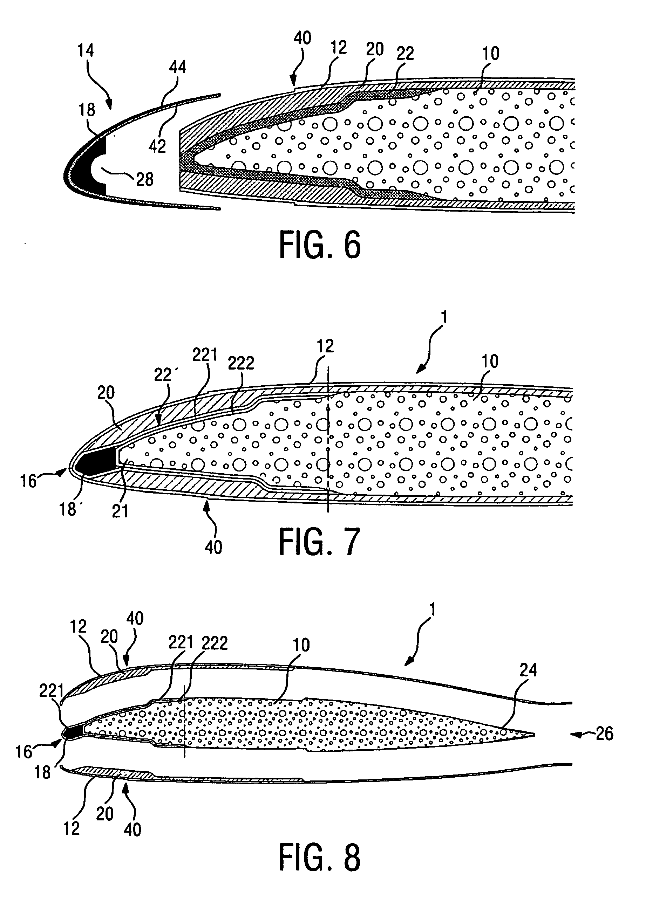

Figure 5 shows the profile body 1 thus assembled. It is prepared so far that the nose shell 14 can now be placed thereon. For illustration, the profile body 1 and the nose shell are shown enlarged in Figure 6. The nose shell 14 comprises a cap support 42 and a, for example, metal coating as erosion protection 44. The nose weight 18 is additionally disposed in its tip.

The nose shell 14 is pre-assembled on a shaped body corresponding to the profile body 1 shown in Figure 6 before it is mounted thereon. The surface of the shaped body is coated with a Teflon adhesive strip. As a first layer a film adhesive is laid over the shaped body. A distance-forming or three-dimensional fabric is applied in that region in which the nose shell 14 protrudes over the nose weight 18. A film adhesive is now drawn over the entire shaped body, on which the cap support 42 is placed. Its outer side now lying at the top is also provided with a film adhesive on which the erosion protection 44 is placed. After curing the film adhesive under temperature, the nose shell 14 is removed from the shaped body and placed on the profile body 1. The distance-forming fabric simplifies the connection of the nose shell 14 with the profile body since it slides on the fibre material of the blade skin 12. During heating for curing the film adhesive, this penetrates the distance-forming fabric which as a spacer leads to a constant thickness of the adhesive layer.

Figure 7 shows an alternative embodiment of a profile body 1 in the area of its leading edge 16. This profile body 1 also comprises a foam core 10 having a foam cap 22' placed on its tip 21. This is covered by a stepped spar 20 which is covered by the blade skin 12. The profile body 1 shown differs from the previous exemplary embodiments by the shape and arrangement of the nose weight 18' and the foam cap 22'. This consists of two fibre layers 221, 222. The lower layer 222 directly encloses the tip 21 of the foam core 10. The upper layer 221 on the other hand encloses the nose weight 18' which is positioned in front of the tip 21. Thus, the nose weight 18' is integrated in the foam cap 22'. A separately produced nose shell 14 according to Figure 6 can thus be dispensed with.

This leads to a different design of the blade skin 12 and the spar 20. In the area of the leading edge 16 of the profile body 1, therefore they no longer end jointly at a quasi-perpendicular surface (cf. Fig. 5) in front of which the nose weight 18 is placed. Rather the spar 20 now extends up to the height of the nose weight 18. The blade skin 12 even encloses it. Nevertheless, the flat fibre strips of the stepped spar 20 can consist of equal-width strips, be only slightly offset and thus form edge zones which run out flat.

Figure 8 once again illustrates the structure of the profile body according to Figure 7 in an exploded view. In the area of the leading edge 16 of the profile body, the blade skin 12 projects beyond the spar 20, is blunted at the leading edge 16 and thereby embraces the nose weight 18' located in the foam cap 22'. The step 40 in the blade skin 12 in this embodiment also illustrates that an erosion protection 44 not shown (cf. Figure 6) is finally applied.

A modified resin flow is thus obtained for the manufacture of the profile body 1 in the resin injection method: resin injected from the leading edge 16 now flows around the nose weight 18'. So that the nose weight 18' does not form any barely injectable "shadow regions", it is configured to be arrow-shaped and slender, similar to a lengthening of the tip 21 of the foam core 10. As a result, the spar 20 and the foam cap 22' are reliably injected with resin.

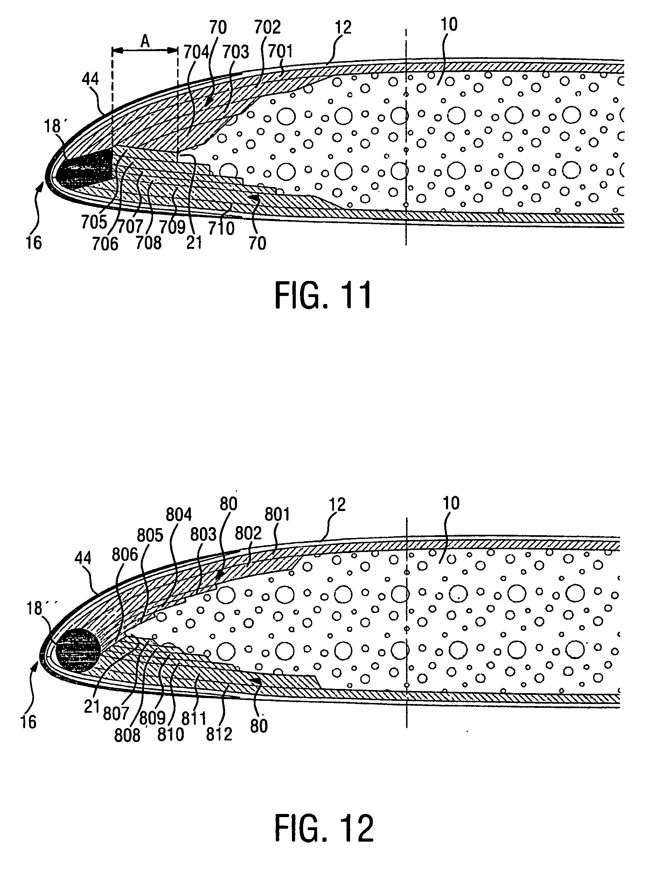

Figures 11 and 12 show further variants for profile bodies according to Figures 4 to 8. The profile body in Figure 11 consists unchanged of a foam core 10 which, when viewed from a leading edge 16, is covered with decreasingly stepped spars 70 respectively on its upper side and its lower side. A blade skin 12 is spanned thereover to which an erosion protection 44 is applied. At the leading edge 16 a nose weight 18' is applied under the erosion protection 44 and under the blade skin 12, the shape of which largely corresponds to that according to Figure 7.

Unlike the profile body according to Figure 7, that according to Figure 11 has no foam cap 22 (cf. Figure 6) or 22' (cf. Figure 7). The spars 70 are therefore applied directly to the foam core 10 in the area of the leading edge 16 without an interposed foam cap. Another difference is that the nose weight 18' is no longer separated from the foam core 10 by only a relatively thin fibre layer 222 of the foam cap 22' as in Figure 7 or Figure 8 but has an appreciable distance A of about 20 mm from the tip 21 of the foam core 10. The section of the two spars 70 lying between the nose weight 18' and the foam core 10 therefore now supports the nose weight 18' with respect to the foam core 10. In the event of an impact, for example, a stone or a branch onto the leading edge 16 of the rotor blade, the force thereby acting on the nose weight 18' is distributed over the spar sections or layer packages 702 to 709 and transmitted extensively to the foam core 10. They now form a type of arch over the foam core 10. As a result of the distribution of the acting force over a large area of the foam core 10, a lower surface pressure is produced which can be absorbed by the relatively soft foam core 10 free from damage.

The upper and lower spars 70 are each composed of a plurality of layer packages 201 to 204 or 205 to 210. Each layer package for its part consists of a plurality of individual fibre layers with different numbers of layers. For example, the layer package 701 consists of significantly fewer individual fibre layers than the layer package 704. The layer packages 701 to 710 are arranged offset amongst one another to produce stepped spars 70 as far as possible, which produce a "soft", i.e. extensive transition between the spars 70 and the foam core 10.

The layer packages 701 to 710 therefore consist of a plurality of fibre layers. These can either be laid directly congruently above one the other so that a rectangular cross-section layer package is obtained: The layer packages 705 to 708 are constructed in this way. The remaining layer packages 702 to 704 and the layer package 709 have an identifiably trapezoidal cross-section. This is formed by the individual fibre layers of the relevant layer packages being laid slightly offset above one another on the foam core 10 or another layer package as underlayer so as to produce a parallelogram-shaped layer package in cross-section which would be laid on one of its parallel sides. This runs out in two tips, one projecting from the underlayer. During installation however, the fibre layers of the projecting part of the parallelogram are laid unilaterally in such a manner that they likewise rest on the underlayer and a trapezium is obtained instead of a parallelogram. As a result, the nose weight 18' can be fitted geometrically well in the two spars 70 of the profile body.

Figure 12 shows a structure which is fundamentally the same as Figure 11 but with a different nose weight 18". This has a circular cross-section and is therefore more cost-effective to produce than the nose weight 18' according to Figures 7, 8 and 11. Its different geometry also allows a different structure of the spars 80. Its layer packages 802 or 807 to 812 are furthermore predominantly configured as trapezoidal in cross-section, the layer packages 803 to 806 on the other hand being rectangular. Their structure favours mechanical production of the layer packages.

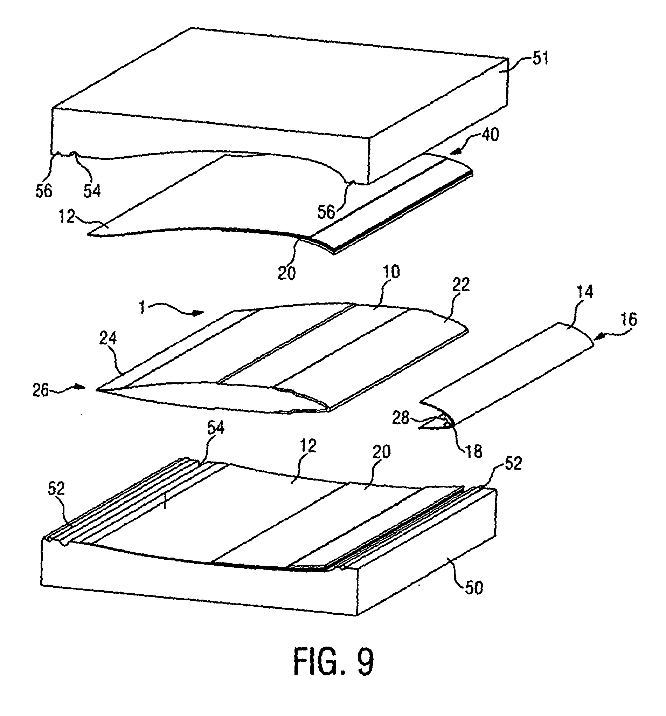

Figure 9 shows a schematic diagram of an injection mould consisting of a lower shell 50 and an upper shell 51 together with the profile body fabricated therein. This reproduces the individual parts during the production of the profile body 1 but not their correct placement during the manufacturing method. A blade skin 12 with spar 20 fixed thereon is already inserted in a lower shell 50 of an injection mould. A sealing cord 52 runs in the lower shell 50 at the future leading edge 16 of the profile body 1. Parallel to this runs another sealing cord 52 at the future rear side 26 of the profile body 1. Between this sealing cord 52 and the rear side 26, a bead 54 having a semicircular cross-section runs in the lower shell 50. This is completed by a correspondingly shaped bead 54 on the upper shell 51 to form a circular channel. Correspondingly smaller shaped slits 56 into which the seals 52 fit run parallel to this both on the rear side 26 and at the leading edge 16.

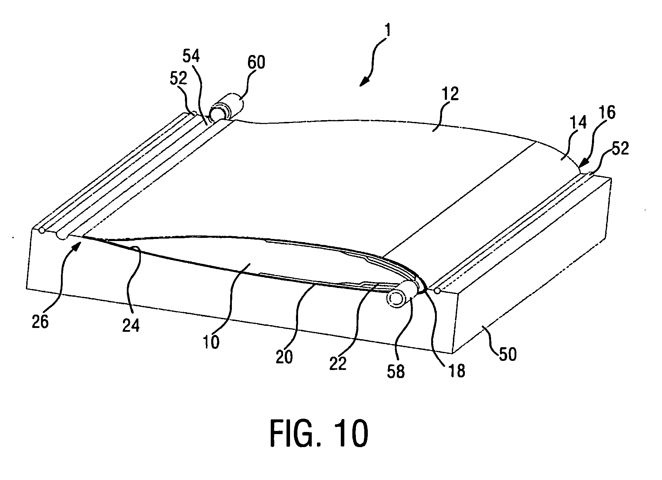

Figure 10 shows the finished profile body 1 which is inserted in the lower shell 50 of the injection mould. An injection connection 58 is already mounted on the covered injection channel 28 which runs in the longitudinal direction of the blade in the nose weight 18. A vacuum connection 60 is mounted on the bead 54 on the rear side 26 of the profile body 1 in the lower shell 50 which is completed by a corresponding bead in the upper shell 51 to form a channel. Injection resin is pressed into the injection channel 28 through the injection connection 58. This then flows through the profile body 1 from its leading edge 16 towards its rear side 26. There it emerges and is extracted via the vacuum connection 60. A complete and uniform injection of the profile body 1 is thus ensured.

Since the preceding profile body which has been described in detail and the method for its manufacture comprises an exemplary embodiment, these can be broadly modified in the usual manner by the person skilled in the art without departing from the scope of the invention. In particular, the specific cut of the fibre layers and the sequence of their arrangement can be effected in a different form to that described here if this is necessary for reasons of space or design reasons. Furthermore, the use of the indefinite article "a" or "an" does not exclude the fact that the relevant features can also be multiply present.

### REFERENCE LIST

- 1: Profile body
- 10: Foam core
- 12: Blade skin
- 14: Nose shell
- 16: Leading edge
- 18, 18', 18": Nose weight
- 20, 70, 80: Spar
- 21: Tip
- 22, 22': Foam cap
- 23: End
- 24: Trailing edge reinforcement
- 26: Rear side
- 28: Injection channel
- 30: Injection channel
- 32: Injection channel
- 34: Web
- 36: Step
- 38: Step
- 40: Step
- 42: Cap support
- 44: Erosion protection
- 50: Lower shell
- 51: Upper shell
- 52: Sealing cord
- 54: Slit
- 56: Slit
- 58: Injection connection
- 60: Vacuum connection

- 201 to 204: Layer packages of spar 20
- 701 to 710: Layer packages of spars 70
- 801 to 812: Layer packages of spars 80
- 221, 222: Fibre layers of foam cap 22'

## Claims

1. A profile body (1) in fibre composite design, in particular a rotor blade of a rotary-wing aircraft,
- comprising a foam core (10),
- comprising a blade skin (12) enveloping the foam core (10),
- comprising a nose shell (14) as erosion protection at a leading edge (16) of the profile body (1), and
- comprising spars (20) running in the longitudinal direction of the blade, these spars (20) being constructed of unidirectional flat fibre strips (201; 202; 203; 204), said flat fibre strips (201; 202; 203; 204) being located in a profile thickness direction in a concentrated manner on a profile outer side,
**characterised in that** a nose weight (18) at the leading edge (16) of the profile body (1) is provided and **in that** the spars (20) begin behind the nose weight (18) and under blade skin (12), still in the area of the nose shell (14) and have a cross section which tapers in the direction of a rear side (26),

2. The profile body according to the above claim **characterised in that** the fibres of the flat strips (201; 202; 203; 204) are held mechanically, i. e. by seams or cross-woven fibres, or chemically, i. e. by adhesive binder material, in the transverse direction.

3. The profile body according to claim 1 or 2, **characterised by** a different width of the flat fibre strips (201; 202; 203; 204) to form stepped spars (20) with increasing thickness in the direction of the leading edge (16) of the profile body (1).

4. The profile body according to one of the above claims **characterised by** a foam cap (22, 22') which stabilises the profile body (1) at the leading edge (16) of the foam core (10) and/or a trailing edge reinforcement (24) at the rear side (26).

5. The profile body according to one of the above claims **characterised by** a nose weight (18') with integrated injection or vacuum channel (28) for the injection resin running in the longitudinal direction of the blade on its rear side facing away from the leading edge (16).

6. The profile body according to one of the above claims **characterised by** injection channels (30; 32) in the foam core (10).

7. The profile body according to one of the above claims **characterised by** webs (34) for connecting the blade upper and lower side.

8. A method for manufacturing a profile body (1), in particular a rotor blade of a helicopter, in fibre composite design by resin injection technology comprising the following steps:
a) Manufacturing a filling core (10) of the rotor blade, **characterized by**
b) Covering the filling core (10) in sections with fibre caps (22, 22'; 24) of a textile fabric (221; 222),
c) Manufacturing an upper and a lower blade skin (12) from fibre scrims or fibre fabrics, cladding the filling core (10) together with caps (22; 22', 24) with a textile fabric (12; 20),
d) Filling a nose weight (18) into a tip of the nose shell (14),
e) Applying coated flat fibre strips (201; 202; 203; 204) and fixing onto the blade skins (12) to begin behind the nose weight (18) and under blade skin (12), still in the area of the nose shell (14) to form spars (20) having a cross section which tapers in the direction of a rear side (26) of the profile body (1),
f) Inserting the lower blade skin (12), the filling core (10) with the fibre caps (22, 22', 24) placed thereon and the upper blade skin (12) into an injection mould (50, 51),
g) Injecting resin into the closed injection mould (50, 51),
h) Curing and de-moulding the profile body (1).

9. The method according to the above claim **characterised in that** the injection resin is injected linearly from a front side (16) of the rotor blade.

10. The method according to one of the above process claims, **characterised in that** unidirectional flat fibre strips (201; 202; 203; 204) are pre-assembled to form reinforcing sections (20).

11. The method according to one of the above process claims, **characterised in that** the unidirectional flat fibre strips are pre-assembled with the blade skins.

12. The method according to one of the above process claims, **characterised in that** an erosion protection (44) is only attached after de-moulding the profile body (1) in step f).

## Patentansprüche

1. Faserverbundprofilkörper (1), insbesondere Rotorblatt eines Drehflügelluftfahrzeugs,
- mit einem Schaumkörper (10),
- einer Blatthaut (12), die den Schaumkörper (10) umhüllt,
- einer Bugschale (14) als Erosionsschutz der Vorderkante (16) des Profilkörpers (1), und
- Holmen (20), die in Längsrichtung des Blattes verlaufen, wobei diese Holme (20) aus gleichlaufend gerichteten flachen Faserstreifen (201; 202; 203; 204) konstruiert sind, wobei die flachen Faserstreifen (201; 202; 203; 204) in einer profildicken Richtung in konzentrierter Weise auf einer Profilaußenseite angeordnet sind, **dadurch gekennzeichnet, dass** ein Buggewicht (18) an der Vorderkante (16) des Profilkörpers (1) vorgesehen ist und **dadurch**, dass die Holme (20) hinter dem Buggewicht und unter der Blatthaut (12) noch in dem Bereich der Bugschale (14) beginnen und einen Querschnitt aufweisen, der in Richtung auf die Rückseite (26) abnimmt.

2. Profilkörper nach Anspruch 1, **dadurch gekennzeichnet, dass** die Fasern der flachen Streifen (201; 202; 203; 204) mechanisch in Querrichtung gehalten werden, zum Beispiel durch Falze oder kreuzweise gewebte Fasern oder chemisch, zum Beispiel durch klebendes Bindematerial.

3. Profilkörper nach Anspruch 1 oder 2, **gekennzeichnet durch** verschiedene Breiten der flachen Faserstreifen (201; 202; 203; 204), um abgestufte Holme (20) zu bilden mit ansteigender Dicke in Richtung auf die Führungskante (16) des Profilkörpers (1).

4. Profilkörper nach einem der vorstehenden Anspruche, **gekennzeichnet durch** eine Schaumkappe (22, 22'), die den Profilkörper (1) an der Vorderkante (16) des Schaumkerns (10) stabilisiert und/oder **durch** eine Verstärkung (24) der Hinterkante an der Rückseite (26).

5. Profilkörper nach einem der vorstehenden Ansprüche, **gekennzeichnet durch** ein Buggewicht (18') mit integriertem Injektions- oder Vakuumkanal (28) zum Einspritzen von Harz, wobei der Kanal in Längsrichtung des Blatts auf dessen Hinterseite, die von der Vorderkante (16) wegzeigt, verläuft.

6. Profilkörper nach einem der vorstehenden Ansprüche, **gekennzeichnet durch** Injektionskanäle (30; 32) im Schaumkörper (10).

7. Profilkörper nach einem der vorstehenden Ansprüche, **gekennzeichnet durch** Verstärkungsrippen (34) zum Verbinden der Ober- und der Unterseite des Blattes.

8. Verfahren zur Herstellung eines Profilkörpers (1), insbesondere eines Rotorblattes eines Helikopters als Faserverbundkörper durch Harzinjektionstechnik mit folgenden Schritten:
a) Herstellen eines Füllkörpers (10) des Rotorblatts, **gekennzeichnet durch**
b) Bedecken des Füllkörpers (10) in Abschnitten mit Faserdeckschichten (22, 22'; 24) aus Textilstoff (221; 222),
c) Herstellen einer oberen und einer unteren Blatthaut (12) aus Fasergelegen oder Faserstoffen, Verkleiden des Füllkörpers (10) zusammen mit den Abdeckungen (22; 22', 24) mit einem Textilstoff (12; 20),
d) Einhüllen eines Buggewichtes (18) in eine Spitze der Bugschale,
e) Auflegen flacher Faserstreifen (201; 202; 203; 204) und Befestigen auf der Blatthaut (12) anfangend hinter dem Buggewicht und hinter der Blatthaut (12) noch in dem Bereich der Bugschale (14), um Holme (20) zu bilden, die einen Querschnitt aufweisen, der in Richtung auf die Rückseite (26) des Profilkörpers (1) abnimmt,
f) Einfügen der unteren Blatthaut (12), des Füllkörpers (10) mit den Faserabdeckungen (22, 22'; 24), die darauf platziert sind und der oberen Blatthaut (12) in eine Einspritzform (50, 51),
g) Einspritzen von Harz in die geschlossenen Einspritzform (50, 51),
h) Härten und Entformen des Profilkörpers (1):

9. Verfahren nach Anspruch 8, **dadurch gekennzeichnet, dass** das Injektionsharz linear von einer Stirnseite (16) des Rotorblatts aus eingespritzt wird.

10. Verfahren nach einem der Ansprüche 8 oder 9, **dadurch gekennzeichnet, dass** die gleichlaufenden flachen Faserstreifen (201; 202; 203; 204) vormontiert sind, um Verstärkungsabschnitte (20) zu bilden.

11. Verfahren nach einem der Ansprüche 8 bis 10, **dadurch gekennzeichnet, dass** die gleichlaufenden flachen Faserstreifen zusammen mit den Blatthäuten vormontiert sind.

12. Verfahren nach einem der Ansprüche 8 bis 11, **dadurch gekennzeichnet, dass** ein Erosionsschutz (44) erst nach dem Entformen des Profilkörpers (1) in Schritt f) angebracht wird.

## Revendications

1. Corps profilé (1) dans une conception de composite de fibres, en particulier une pale de rotor d'un aéronef à voilure tournante,
- comprenant un coeur en mousse (10),
- comprenant un revêtement de pale (12) enveloppant le coeur en mousse (10),
- comprenant une coque avant (14) comme protection contre l'érosion sur un bord d'attaque (16) du corps profilé (1), et
- comprenant des longerons (20) s'étendant dans la direction longitudinale de la pale, ces longerons (20) étant constitués de bandes de fibres plates unidirectionnelles (201 ; 202 ; 203 ; 204), lesdites bandes de fibres plates (201 ; 202 ; 203 ; 204) étant situées dans la direction de l'épaisseur du profilé d'une manière concentrée sur un côté extérieur du profilé,
**caractérisé en ce qu'**une masse d'équilibrage avant (18) est disposée sur le bord d'attaque (16) du corps profilé (1) et **en ce que** les longerons (20) commencent derrière la masse d'équilibrage avant et sous le revêtement de pale (12), toujours dans la zone de la coque avant (14), et ont une section transversale qui est conique dans la direction d'un côté arrière (26).

2. Corps profilé selon la revendication précédente, **caractérisé en ce que** les fibres des bandes plates (201 ; 202 ; 203 ; 204) sont maintenues mécaniquement, c.-à-d. par des coutures ou des fibres croisées, ou chimiquement, c.-à-d. par un liant adhésif, dans la direction transversale.

3. Corps profilé selon la revendication 1 ou 2, **caractérisé par** une largeur différente des bandes de fibres plates (201 ; 202 ; 203 ; 204) pour former des longerons étagés (20) avec une épaisseur croissante dans la direction du bord d'attaque (16) du corps profilé (1).

4. Corps profilé selon l'une des revendications précédentes, **caractérisé par** une coiffe en mousse (22, 22') qui stabilise le corps profilé (1) sur le bord d'attaque (16) du coeur en mousse (10) et/ou un renfort de bord de fuite (24) sur le côté arrière (26).

5. Corps profilé selon l'une des revendications précédentes, **caractérisé par** une masse d'équilibrage avant (18') avec un canal d'injection ou de vide intégré (28) pour l'injection de résine s'étendant dans la direction longitudinale de la pale sur son côté arrière en s'éloignant du bord d'attaque (16).

6. Corps profilé selon l'une des revendications précédentes, **caractérisé par** des canaux d'injection (30 ; 32) dans le coeur en mousse (10).

7. Corps profilé selon l'une des revendications précédentes, **caractérisé par** des bandes (34) pour relier le côté supérieur et inférieur de la pale.

8. Procédé de fabrication d'un corps profilé (1), en particulier d'une pale de rotor d'un hélicoptère, dans une conception de composite de fibres, par une technologie d'injection de résine, comprenant les étapes suivantes :
a) fabriquer un coeur de remplissage (10) de la pale de rotor, **caractérisé par**
b) le recouvrement du coeur de remplissage (10) par sections avec des coiffes de fibres (22, 22' ; 24) d'un tissu (221 ; 222),
c) fabriquer un revêtement de pale supérieur et inférieur (12) à partir de canevas de fibres ou de tissus de fibres, en enrobant le coeur de remplissage (10) et les coiffes (22, 22' ; 24) avec un tissu (12 ; 20),
d) introduire une masse d'équilibrage avant (18) dans un bout de la coque avant (14),
e) appliquer des bandes de fibres plates enduites (201 ; 202 ; 203 ; 204) et les fixer sur les revêtements de pale (12) en commençant derrière la masse d'équilibrage avant et sous le revêtement de pale (12), toujours dans la zone de la coque avant (14), pour former des longerons (20) ayant une section transversale qui est conique dans la direction d'un côté arrière (26) du corps profilé (1),
f) insérer le revêtement de pale inférieur (12), le coeur de remplissage (10) avec les coiffes de fibres (22, 22' ; 24) placées par-dessus et le revêtement de pale supérieur (12) dans une moule à injection (50, 51),
g) injecter de la résine dans le moule à injection (50, 51) fermé,
h) durcir et démouler le corps profilé (1).

9. Procédé selon la revendication précédente, **caractérisé en ce que** la résine d'injection est injectée linéairement depuis un côté avant (16) de la pale de rotor.

10. Procédé selon l'une des revendications de procédé précédentes, **caractérisé en ce que** des bandes de fibres plates unidirectionnelles (201 ; 202 ; 203 ; 204) sont préassemblées pour former des sections de renforcement (20).

11. Procédé selon l'une des revendications de procédé précédentes, **caractérisé en ce que** les bandes de fibres plates unidirectionnelles sont préassemblées avec les revêtements de pale.

12. Procédé selon l'une des revendications de procédé précédentes, **caractérisé en ce qu'**une protection contre l'érosion (44) est fixée uniquement après démoulage du corps profilé (1) à l'étape f).
